# FASCICULE DE BREVET EUROPEEN

(11) **EP 2 181 941 B1**
(45) Date de publication et mention de la délivrance du brevet: **03.08.2011**
(21) Numéro de dépôt: 09290793.0
(22) Date de dépôt: 16.10.2009
(51) Int. Cl.: B65D 85/60, A23G 1/56, A23G 1/30

(54) **Procédé de fabrication d'un conditionnement de chocholat, et son utilisation pour la fabrication d'un objet en chocholat de type couverture de chocolat**
Herstellprozess für Schokoladenpackungen, und deren Verwendung zur Herstellung von Schokoladenkuvertüre
Manufacturing process for packaged chocolate, and its use for producing a chocolate coating material

(30) Priorité: 28.10.2008 FR 0857301
(43) Date de publication de la demande: 05.05.2010
(73) Titulaire: Morgeat, Joël, 92380 Garches (FR)
(72) Inventeur: Morgeat, Joël, 92380 Garches (FR)

(56) Documents cités:
- EP-A1- 1 733 625
- WO-A-2004/077964
- DE-A1- 19 962 463
- DE-B1- 1 517 111
- DE-U1- 8 223 246
- FR-A- 2 826 837
- GB-A- 515 430
- US-A1- 2004 247 751
- US-A1- 2007 059 433

## Description

La présente invention concerne la fabrication d'un objet en chocolat de type couverture de chocolat.

L'invention concerne plus particulièrement un conditionnement de chocolat, un procédé d'obtention d'un tel conditionnement et un procédé de fabrication d'un objet en chocolat de type couverture de chocolat utilisant ledit conditionnement.

Les objets en chocolat présentant des formes particulières du type oeufs de Pâques, cloches et autres sont généralement réalisés à partir d'un chocolat dit «de couverture» formant une «couverture de chocolat ». Cette couverture de chocolat est versée dans un état très fluide sur un support donnant sa forme finale à l'objet lorsque le chocolat est refroidi à température ambiante. Le chocolat de couverture est un chocolat de grande qualité, qui se différencie des chocolats disponibles dans le commerce de détail, en particulier sous forme de plaquettes, en ce qu'il est essentiellement constitué de beurre de cacao, sans ajout d'autres matières grasses végétales. Sa manipulation, délicate, est habituellement réservée aux professionnels. Les procédés de fabrication de couverture de chocolat développés par les chocolatiers nécessitent une grande précision et un savoir-faire considérable. En particulier, la réalisation d'une couverture de chocolat nécessite une phase de tempérage, consistant à porter le chocolat de couverture successivement à différentes températures bien définies. Si ces conditions de température ne sont pas scrupuleusement respectées, la qualité du produit diminue, le chocolat perd son croquant et peut présenter des marbrures ou des tâches blanches peu esthétiques. La phase de tempérage de la couverture de chocolat requière l'utilisation d'instruments particuliers, tels que, par exemple, une plaque de marbre, un fondoir ou une tempéreuse. En outre, certains procédés requièrent le respect de conditions d'hygiène très strictes, difficilement envisageables hors d'un cadre industriel ou professionnel. D'autres procédés nécessitent un travail long et contraignant. Enfin, la manipulation du chocolat peut entraîner la souillure du plan de travail et du chocolatier lui-même.

Une personne non initiée à la manipulation du chocolat n'a à sa disposition ni le chocolat de couverture, ni le matériel et les installations adaptés, ni enfin le savoir-faire nécessaire à la fabrication d'objets en chocolat de type couverture de chocolat.

La présente invention a donc pour but de permettre à tout un chacun de réaliser chez lui un ou plusieurs objets en chocolat de type couverture en chocolat, de manière simple, ludique, propre et rapide.

Ce but est atteint avec un conditionnement de chocolat comprenant une poche contenant des morceaux de chocolat non agrégés entre eux, grâce au fait que la poche est une poche plate réalisée dans un matériau souple et imperméable, dans laquelle un contour fermé continu délimite un espace intérieur contenant hermétiquement les morceaux de chocolat, et au fait que les morceaux de chocolat occupent seulement une partie dudit espace intérieur de manière à ménager dans ce dernier un espace libre permettant le malaxage des morceaux de chocolat à travers la poche lorsque les morceaux de chocolat sont chauffés jusqu'à atteindre un état pâteux.

L'invention concerne également un procédé d'obtention d'un tel conditionnement de chocolat, dans lequel on place des morceaux de chocolat non agrégés entre eux dans l'espace intérieur d'une poche, et caractérisé en ce qu'on utilise une poche plate à parois souples, on ferme la poche selon un contour fermé continu après y avoir placé les morceaux de chocolat, et, en plaçant les morceaux de chocolat dans l'espace intérieur, on fait en sorte que ces morceaux occupent seulement une partie de l'espace intérieur de manière à ménager dans ce dernier un espace libre permettant le malaxage des morceaux de chocolat à travers lesdites parois lorsque les morceaux sont chauffés jusqu'à atteindre un état pâteux.

Grâce à ces dispositions, il est possible de conserver et de transporter facilement le chocolat avant son utilisation. Par ailleurs, la poche est hermétique et imperméable, de sorte que, même lorsque le chocolat est sous forme liquide, il est possible de le manipuler proprement, sans se salir les doigts, et sans souiller le plan de travail. Enfin, dans la mesure où un espace libre est ménagé dans l'espace intérieur, le malaxage de la poche et la désagrégation du chocolat sont facilités. On peut ainsi obtenir une pâte bien homogène beaucoup plus facilement que lorsque le chocolat est chauffé dans une casserole et travaillé à l'aide d'une spatule ou d'une cuillère.

Selon le procédé de l'invention il est possible de mettre en dépression l'espace intérieur contenant les morceaux avant la fermeture de la poche. En effet, le niveau de dépression est alors choisi pour que, sous l'effet de la dilatation de volume du gaz (air) contenu dans la poche en plus du chocolat sous l'effet de l'augmentation de température portant le chocolat à l'état pâteux, le volume interne nécessaire au malaxage est créé.

Selon un aspect de l'invention, les morceaux de chocolat contenus dans la poche résultent du traitement préalable d'un chocolat du type chocolat de couverture, destiné à amener ledit chocolat dans un état stabilisé.

Le traitement préalable du chocolat peut par exemple consister à chauffer le chocolat jusqu'à le porter à une première température, refroidir le chocolat en le malaxant ou en le laissant reposer, jusqu'à l'amener à une seconde température, chauffer le chocolat jusqu'à le porter à une troisième température, étaler le chocolat sur un support plat pour former une fine couche de chocolat, laisser reposer le chocolat jusqu'à ce qu'il durcisse et forme une plaque de chocolat, et enfin briser la plaque de chocolat pour obtenir les morceaux de chocolat.

De préférence, la première température est supérieure à la seconde température, et la troisième température est comprise entre la première et la seconde température. Selon un exemple de réalisation, la première température est comprise entre 45 et 60°C, la seconde température est comprise entre 24 et 29°C et est de préférence égale à 26°C et la troisième température est comprise entre 28°C et 32°C,

La fine couche de chocolat présente de préférence une épaisseur inférieure à 12 mm, avantageusement inférieure à 5 mm, et plus avantageusement encore comprise entre 2 et 3 mm.

De préférence, l'espace intérieur de la poche est tel que, lorsque le chocolat est fondu et forme une pâte uniforme, l'épaisseur moyenne de la poche, reposant sur un grand côté, est comprise entre 0,5 et 1 cm et de préférence entre 0,5 et 0,8 cm.

Selon un autre aspect de l'invention, un procédé de fabrication d'un objet en chocolat de type couverture de chocolat est caractérisé en ce qu'on réalise un conditionnement par le procédé tel que décrit précédemment, on chauffe la poche contenant les morceaux de chocolat jusqu'à porter les dits morceaux à une température de malaxage, on réalise une étape de malaxage primaire en malaxant les morceaux à la température de malaxage à travers les parois de la poche jusqu'à obtenir une pâte de chocolat homogène, et on verse la pâte de chocolat sur un support sur lequel on forme l'objet.

Selon un autre aspect de l'invention, après avoir réalisé l'étape de malaxage primaire, on réalise une étape d'épaississement en refroidissant la poche de manière à ramener le chocolat à une température d'épaississement, et, avant de vider le contenu de la poche, on réalise une étape de malaxage final.

Selon un autre aspect de l'invention, entre l'étape d'épaississement et l'étape de malaxage final, on réalise une étape de malaxage intermédiaire pour favoriser l'homogénéité du mélange épaissi et on chauffe à nouveau la poche pour porter le chocolat à une température intermédiaire.

Selon un autre aspect de l'invention, la température de malaxage est supérieure à la température d'épaississement et la température intermédiaire est comprise entre la température de malaxage et la température d'épaississement.

Un moyen pour chauffer la poche est de la plonger dans un liquide chaud.

Par exemple, pour porter le chocolat à la température de malaxage, on plonge la poche dans un liquide chaud, et, pour porter le chocolat à la température intermédiaire, on plonge la poche dans le même liquide que l'on a laissé reposer pendant les étapes de malaxage primaire, d'épaississement et de malaxage intermédiaire.

La durée d'immersion de la poche dans le liquide chaud peut être fonction de la température à laquelle la poche a été stockée, de la quantité de chocolat par rapport au volume du liquide, de la température du liquide et de la nature du matériau constituant la poche.

Avant que le contenu de la poche ne soit déversé, le procédé peut en outre comporter une étape de séchage de la poche destinée à éliminer toute trace de liquide sur la surface extérieure de celle-ci.

Avant de verser la pâte de chocolat sur le support sur lequel l'objet est formé, on peut verser le contenu de la poche dans un récipient dans lequel on remue le chocolat. On améliore ainsi la consistance du chocolat. Par ailleurs, il est possible de contrôler la température du chocolat au moyen d'un thermomètre, avant son utilisation pour la confection d'objets en chocolat

L'invention sera bien comprise et ses avantages apparaîtront mieux à la lecture de la description détaillée qui suit, faite en référence aux dessins annexés sur lesquels :
Les figures 1a à 1d représentent différentes étapes du procédé d'obtention d'un conditionnement de chocolat selon la présente invention,
La figure 2 est un tableau donnant la durée d'immersion de la poche en minutes en fonction de la température de stockage de la poche, selon un second mode de réalisation de l'invention, pour une poche contenant 300 grammes de chocolat, en utilisant 2 litres de liquide porté à 46°C.

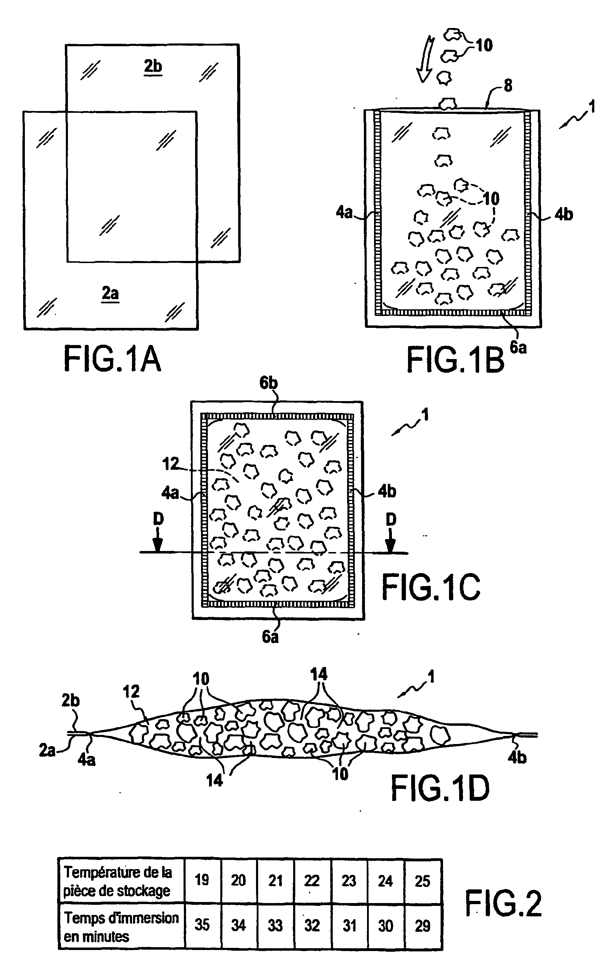

Un conditionnement de chocolat selon la présente invention, ainsi que son procédé d'obtention, vont être décrits dans la suite en référence aux figures 1a à 1d.

Sur la figure 1a, on a représenté deux feuilles planes 2a, 2b rectangulaires, destinées à former une poche 1 contenant du chocolat. Comme illustré sur la figure 1b, les deux feuilles 2a et 2b, placées en regard l'une de l'autre, sont soudées le long de deux lignes de soudures sensiblement parallèles 4a, 4b formant les bords latéraux de la poche et le long d'une ligne de soudure 6a sensiblement perpendiculaire aux bords latéraux 4a, 4b et formant le fond de la poche. Selon une variante de réalisation de l'invention, la poche peut également être formée à partir d'une seule feuille repliée sur elle-même. Dans ce cas, la ligne de pliage peut par exemple former le fond de la poche et, pour former la poche, la feuille repliée est soudée le long de deux lignes de soudure sensiblement perpendiculaires à la ligne de pliage de la feuille, formant ainsi les bords latéraux de la poche. La poche 1 présente à ce stade une extrémité ouverte 8 par laquelle sont introduits des morceaux de chocolat 10, par exemple sous forme de pastilles ou de brisures. Elle est ensuite refermée le long de son extrémité ouverte 8, par une ligne de soudure 6b. La poche 1 est donc une poche plate, c'est-à-dire ne présentant aucun soufflet latéral et ayant seulement deux parois latérales qui, lorsque la poche est vide, sont l'une contre l'autre. Elle est fermée hermétiquement par un contour fermé continu s'inscrivant dans un plan, constitué par des lignes de soudure et/ou de pliage et formant un espace intérieur 12 de volume V dans lequel sont enfermés les morceaux de chocolat. Pour améliorer la conservation du chocolat, il est possible de mettre en dépression l'espace intérieur 12 de la poche 1 avant de souder l'extrémité ouverte 8. Le niveau de dépression doit cependant être choisi pour qu'un espace libre 14 de volume Ve subsiste entre les morceaux de chocolat, cet espace libre étant suffisant pour que, lorsque le volume d'air contenu dans la poche en plus du chocolat s'est dilaté sous l'effet de l'augmentation de la température portant le chocolat à l'état pâteux, la poche puisse être aisément malaxée. Le volume Ve de l'espace libre 14 peut par exemple représenter entre 10 et 20% du volume total V de l'espace intérieur 12. De préférence, l'espace libre 14 représente entre 10 et 15% du volume total V de l'espace intérieur 12. Les figures 1c et 1d illustrent le conditionnement selon l'invention. Comme la poche est plate, un utilisateur peut facilement accéder à l'ensemble de son contenu et, en particulier, il peut facilement venir malaxer avec ses doigts les éléments logés dans les commissures de la poche. Les feuilles 2a, 2b sont par exemple constituées en matière plastique. Plus généralement, les feuilles 2a, 2b peuvent être constituées de tout matériau imperméable présentant une souplesse suffisante pour qu'elles n'entravent pas l'opération de malaxage du chocolat. Il s'agit par exemple d'un film de type polyamide/ polypropylène, ayant une épaisseur de l'ordre de 90 µm et un grammage de l'ordre de 90 g/m², cet exemple n'étant évidemment pas limitatif. Par ailleurs, l'espace intérieur 12 de la poche est tel que, lorsque le chocolat est à l'état liquide, l'épaisseur de la poche 1 reste suffisamment faible pour que les morceaux de chocolat puissent être facilement malaxés à travers les feuilles de la poche. Par exemple, lorsque le chocolat est fondu, l'épaisseur moyenne de la poche est comprise entre 0,5 et 1 cm et de préférence entre 0,5 et 0,8 cm une fois que la poche repose sur un grand côté. Les feuillès 2a et 2b peuvent être opaques ou transparentes de manière à permettre à l'utilisateur de visualiser le contenu de la poche. En outre, les feuilles sont réalisées dans un matériau résistant aux températures élevées, et, de manière générale, aux variations brusques de température. La résistance des feuilles 2a, 2b aux températures élevées dépend également de leur épaisseur. Par exemple, des feuilles en Polyamide/polypropylène dont l'épaisseur est de l'ordre de 90 à 140 µm ne pourront généralement résister à des températures supérieures à 60°C. Les feuilles résistant à la cuisson (températures aux alentours de 100°C) présentent généralement une épaisseur d'au moins 190 µm.

Le conditionnement décrit ci-dessus contient un chocolat dit «de couverture », c'est-à-dire un chocolat de très grande qualité constitué essentiellement de beurre de cacao, sans ajout d'autres matières grasses végétales. Selon que le chocolat de couverture considéré est noir, au lait, blanc ou de couleur, il peut toutefois contenir un ou plusieurs composants complémentaires tels que du cacao, du sucre, de la poudre de lait ou encore des colorants alimentaires. La composition particulière du chocolat de couverture lui permet d'atteindre une consistance très fluide, qui permet la réalisation d'enrobages ou d'objets extrêmement fins. Le chocolat de couverture est donc usuellement utilisé par les pâtissiers pour la confection des oeufs de Pâques, cloches, poules et autres. Toutefois, à l'état brut, le chocolat de couverture présente un schéma moléculaire instable, qui le rend impropre à l'utilisation en tant que couverture. A ce stade, le chocolat a été traité pour pouvoir être transporté et manipulé aisément, mais il ne possède encore pas les propriétés de fluidité nécessaires pour obtenir un enrobage fin et réaliser des objets de qualité. Pour atteindre sa consistance optimale, le chocolat doit subir un traitement thermique appelé «tempérage », destiné à stabiliser sa composition. Le chocolat est tout d'abord fondu et porté à une première température comprise entre 45 et 60°. A ce stade, le schéma moléculaire est instable. Le chocolat est ensuite refroidi jusqu'à une seconde température comprise entre 24 et 29°C et de préférence égale à 26°C, Le chocolat est alors à l'état pâteux, mais le schéma moléculaire reste instable. Enfin, le chocolat est porté à une troisième température comprise entre 28 et 32°C, ce qui l'amène dans un état stable d'utilisation. Les valeurs optimales de températures sont fonction du type de chocolat de couverture. Par exemple, dans le cas d'un chocolat noir, la première température est comprise entre 50 et 55°C et est de préférence égale à 54°, la seconde température est comprise entre 24 et 29°C et est de préférence égale à 26°C et la troisième température est comprise entre 30 et 32°e. Ces valeurs seront différentes pour du chocolat au lait, du chocolat blanc, du chocolat de couleur, du chocolat aux épices ou autres. Le conditionnement de chocolat décrit ci-dessus peut contenir un chocolat de couverture à l'état brut ou un chocolat de couverture dans un état stabilisé. On comprend évidemment qu'il peut s'agir de tout type de chocolat de couverture, qu'il soit noir, au lait, blanc, de couleur, ou autre. Dans cet état, le conditionnement peut alors être utilisé par tout un chacun pour la fabrication de chocolat de couverture, destiné à la réalisation de pièces en chocolat. Par exemple, ce conditionnement peut être un moyen simple et ludique pour permettre à des enfants de confectionner eux-mêmes des oeufs, cloches ou lapins de Pâques. Un procédé de fabrication d'objets en chocolat de type couverture de chocolat, utilisant un tel conditionnement, va être décrit dans la suite.

Selon un premier mode de réalisation de l'invention, le conditionnement décrit précédemment contient un chocolat de couverture à l'état brut, c'est-à-dire non stabilisé. Ce chocolat pourra par exemple se présenter sous forme de pistoles, drops ou palets.

Dans un but de simplification, la description est réalisée en référence à une poche contenant environ 300 grammes de chocolat noir. Par conséquent, les indications de volume, de temps et de températures données dans la suite ne doivent être considérées qu'à titre indicatif en liaison avec l'exemple considéré.

Dans une première étape, on porte environ 2 litres d'eau à une température de 80°C. Ce volume d'eau permet un transfert de chaleur optimal entre l'eau chaude et la poche contenant le chocolat. De manière générale, le volume d'eau doit être suffisant pour que, lorsque la poche y est introduite, elle ne fasse pas baisser la température de l'eau d'une manière qui empêcherait finalement le chocolat d'être porté à la température souhaitée. Par ailleurs, l'eau peut être remplacée par un autre liquide, par exemple du lait. Dans une seconde étape, l'eau chaude est retirée du feu et la poche y est immergée durant 7 minutes. Cette durée varie en fonction de la masse de chocolat contenue dans la poche et du volume d'eau chaude entourant la poche. A volume d'eau égal, elle augmentera nécessairement dans le cas de poches contenant une masse plus importante de chocolat et diminuera dans le cas inverse. Durant cette deuxième étape, le chocolat est porté à une température de malaxage comprise entre 50 et 55°C et de préférence égale à 54°C et ramollit même si quelques morceaux peuvent s'agglutiner sous l'effet de leur fusion partielle. Dans une troisième étape, la poche est retirée de l'eau. Elle est essuyée puis malaxée à la main pour éliminer les morceaux de chocolat restants et obtenir une pâte de chocolat homogène. Le malaxage peut par exemple consister à appuyer avec les doigts simultanément sur les deux faces latérales de la poche afin d'écraser les morceaux agglutinés restants. De préférence, l'eau chaude résultant de la première étape est conservée à température ambiante, hors de toute source de chaleur, en vue de sa réutilisation dans une étape ultérieure. Dans une quatrième étape, la poche est placée entre deux plaques froides préalablement stockées 24 heures au congélateur, à une température d'environ -20°C. Au contact des plaques froides, le chocolat épaissit légèrement. On l'y maintient durant 6 minutes et 30 secondes, de sorte que le chocolat atteint une température d'épaississement comprise entre 24 et 29°C et de préférence égale à 26°C. Les plaques froides doivent avoir un volume suffisant pour ne pas se réchauffer trop vite au contact de la poche chaude. Par ailleurs, la surface des plaques doit être assez importante pour couvrir l'ensemble de la poche. Dans une cinquième étape, la poche est à nouveau malaxée afin d'obtenir une pâte bien homogène. Dans une sixième étape, la poche est immergée durant 30 secondes dans l'eau chaude résultant de la première étape, que l'on a laissé refroidir. Le chocolat est ainsi réchauffé jusqu'à une température intermédiaire comprise entre 30 et 32°C. Dans une septième étape, la poche est ensuite séchée et malaxée à nouveau jusqu'à ce que les derniers petits morceaux soient éliminés. Dans une huitième étape, la poche est ouverte et le chocolat est versé dans un récipient où il est remué. Lors de l'ouverture de la poche, il importe que la surface extérieure de la poche soit totalement sèche. Aucune trace d'eau ou de liquide ne doit persister sur l'extérieur de la poche car le moindre contact entre l'eau et le chocolat peut rendre la couverture de chocolat inutilisable. La température du chocolat est vérifiée grâce à un thermomètre, puis le chocolat est étalé, par exemple à l'aide d'un cône, sur 'un support destiné à conférer sa forme finale à l'objet en chocolat. Le support peut par exemple être un moule en forme de demi-coquille, destiné à la réalisation d'un oeuf de Pâques, ou encore des feuilles imprimées, permettant, par décalcomanie, d'imprimer des motifs colorés sur une plaque de chocolat.

Selon un second mode de réalisation de l'invention, le chocolat de couverture contenu dans la poche se trouve déjà dans un état intermédiaire résultant d'un traitement thermique préalable destiné à stabiliser sa composition. Dans ce cas, le procédé d'obtention du conditionnement de chocolat comprend, outre les étapes décrites en référence aux figures 1a à 1c, des étapes de traitement préalable du chocolat de couverture. Le chocolat est tout d'abord porté à une température comprise entre 45 et 60°C, puis refroidi par une étape de malaxage ou de repos, jusqu'à atteindre une température comprise entre 24 et 29°C et de préférence égale à 26°C. Ensuite, le chocolat est réchauffé jusqu'à atteindre une température comprise entre 28 et 32°C. Enfin, le chocolat est étalé sous forme de fine couche sur un support plat et refroidi à température ambiante. Durci, le chocolat forme une plaque de chocolat qui est alors brisée pour obtenir des morceaux de chocolat qui pourront être introduits dans la poche du conditionnement. La plaque de chocolat présente de préférence une épaisseur inférieure à 12 mm, avantageusement inférieure à 5 mm, et plus avantageusement encore comprise entre 2 et 3 mm.

Les brisures de chocolat contenues dans la poche étant d'ores et déjà dans un état stabilisé, le procédé de fabrication d'objets en chocolat s'en trouve considérablement simplifié. Ainsi, pour pouvoir être utilisé comme couverture, le chocolat n'a plus qu'à être réchauffé. Toutefois, afin d'éviter toute modification dans la composition du chocolat et en particulier afin d'éviter son retour à un état instable, le chocolat ne doit pas être chauffé à une température excédant 50°C.

Ainsi, par exemple, pour fabriquer simplement un objet en chocolat, on porte deux litres d'eau dans une casserole de 22 à 26 centimètres de diamètre, à une température de 46°C, et on immerge la poche contenant le chocolat dans l'eau préalablement éloignée de la source de chaleur, pendant une durée déterminée en fonction de la température de stockage de la poche. Un poids peut éventuellement être déposé sur la poche pour faciliter l'immersion.

La figure 2 est un tableau permettant de déterminer la durée optimale d'immersion du chocolat en fonction de la température de stockage. Les valeurs du tableau correspondent à la poche prise comme référence pour la présente description. Celle-ci est de taille moyenne, présente une épaisseur de 90 µm, et contient environ 300 grammes de chocolat noir. La température de stockage correspond à la température de la pièce dans laquelle la poche contenant le chocolat a été stockée avant son utilisation de sorte que le chocolat est initialement à cette température. Plus la température de la pièce de stockage de la poche est élevée, plus la durée nécessaire d'immersion diminue. Par exemple, dans le cas considéré d'une poche contenant 300 grammes de chocolat et stockée dans une pièce à 21 °C, la durée d'immersion dans l'eau sera de 33 minutes.

La poche peut ensuite être retirée de l'eau chaude, séchée, puis vidée dans un récipient à température ambiante. Le chocolat est remué dans le récipient puis sa température est contrôlée à l'aide d'un thermomètre. Pour être utilisé convenablement en tant que couverture, le chocolat doit se trouver à une température comprise entre 30 et 32°C. Enfin, le chocolat est versé sur un support destiné à conférer sa forme finale à l'objet en chocolat.

Dans l'exemple précédent, la poche est chauffée en étant plongée dans un liquide chaud. Cette méthode n'est toutefois pas limitative et on peut par exemple imaginer de chauffer la poche en la maintenant entre deux éléments préalablement portés à une température déterminée. On trouve actuellement dans le commerce des éléments chauffants mieux connus sous le nom de «bouillotes magiques », constitués d'un sac en PVC contenant une solution d'acétate de sodium trihydraté et une petite pastille en métal. Lorsque la pastille est écrasée, la solution devient solide et atteint une température avoisinant les 50°C. Un moyen de chauffer la poche contenant le chocolat stabilisé peut donc consister à placer la poche entre deux éléments de ce type pendant une durée déterminée. Avantageusement, les éléments chauffants seront choisis de taille suffisante pour que la poche contenant le chocolat puisse être entourée complètement par deux de ces éléments, garantissant ainsi l'homogénéité du chauffage. Grâce à ce système, la température de chauffage est aisément maîtrisée et la poche peut être facilement portée à la température de malaxage souhaitée.

Un conditionnement de chocolat selon l'invention peut être vendu, par exemple en grandes surfaces, comme l'un des éléments d'un kit de fabrication d'objets en chocolat. Un tel kit de fabrication peut être constitué d'au moins un conditionnement de chocolat selon l'invention, et d'au moins un support destiné à donner son aspect final au chocolat lorsque celui-ci est refroidi à température ambiante. Le kit peut donc comprendre un moule en forme de demi-coquille, destiné à la réalisation d'un oeuf de Pâques, des feuilles imprimées ou tout autre support permettant la confection d'objets en chocolat. Il pourra également contenir un thermomètre destiné au contrôle de la température du chocolat avant utilisation, une corne destinée à faciliter l'étalement du chocolat, ou encore des plaques de congélation.

Pour permettre une utilisation répétée d'un tel kit de fabrication, le conditionnement de chocolat selon l'invention pourra également être vendu à l'unité, en tant que simple «cartouche de rechange» du kit.

## Revendications

1. Procédé d'obtention d'un conditionnement de chocolat dans lequel on place des morceaux de chocolat non agrégés entre eux dans l'espace intérieur d'une poche, **caractérisé en ce qu'**on utilise une poche plate à parois souples (1), on ferme la poche (1) selon un contour fermé continu après y avoir placé les morceaux de chocolat (10), et **en ce que**, en plaçant les morceaux de chocolat (10) dans l'espace intérieur (12), on fait en sorte que ces morceaux (10) occupent seulement une partie de l'espace intérieur (12) de manière à ménager dans ce dernier un espace libre (14) permettant le malaxage des morceaux de chocolat (10) à travers lesdites parois (1) lorsque les morceaux (10) sont chauffés jusqu'à atteindre un état pâteux, et **en ce que** les morceaux de chocolat (10) contenus dans la poche (1) résultent du traitement préalable d'un chocolat du type chocolat de couverture, destiné à amener ledit chocolat dans un état stabilisé.

2. Procédé d'obtention d'un conditionnement de chocolat selon la revendication 1, **caractérisé en ce que**, avant la fermeture de la poche (1), on met en dépression l'espace intérieur (12) contenant les morceaux de chocolat (10), le niveau de dépression étant choisi pour que, sous l'effet de la dilatation de volume du gaz contenu dans la poche (1) en plus du chocolat sous l'effet de l'augmentation de température portant le chocolat à l'état pâteux, le volume interne nécessaire au malaxage est créé.

3. Procédé d'obtention d'un conditionnement de chocolat selon la revendication 2, **caractérisé en ce que** ledit traitement préalable comprend les étapes suivantes :
- chauffer le chocolat jusqu'à le porter à une première température,
- refroidir le chocolat en le malaxant ou en le laissant reposer, jusqu'à l'amener à une seconde température,
- chauffer le chocolat jusqu'à le porter à une troisième température,
- étaler le chocolat sur un support plat pour former une fine couche de chocolat
- laisser reposer le chocolat jusqu'à ce qu'il durcisse et forme une fine plaque de chocolat,
- briser la plaque de chocolat pour obtenir les morceaux de chocolat.

4. Procédé d'obtention d'un conditionnement de chocolat selon la revendication 3, **caractérisé en ce que** la fine couche de chocolat présente une épaisseur inférieure à 12 mm, avantageusement inférieure à 5 mm, et plus avantageusement encore entre 2 et 3 mm.

5. Procédé d'obtention d'un conditionnement de chocolat selon la revendication 3 ou 4, **caractérisé en ce que** la première température est comprise entre 45°C et 60°C, la seconde température est comprise entre 24 et 29°C et est de préférence égale à 26°C, et la troisième température est comprise entre 28°C et 32°C.

6. Procédé d'obtention d'un conditionnement de chocolat selon l'une quelconque des revendications 1 à 5, **caractérisé en ce que** l'espace intérieur (12) de la poche (1) est tel que, lorsque le chocolat est fondu et forme une pâte uniforme, l'épaisseur moyenne de la poche (1), reposant sur un grand côté, est comprise entre 0,5 et 1 cm et de préférence entre 0,5 et 0,8 cm.

7. Procédé de fabrication d'un objet en chocolat de type couverture de chocolat, **caractérisé en ce que** :
- on réalise un conditionnement par le procédé selon l'une quelconque des revendications 1 à 6,
- on chauffe la poche (1) contenant les morceaux de chocolat (10) jusqu'à porter les dits morceaux à une température de malaxage,
- on réalise une étape de malaxage primaire en malaxant les morceaux à la température de malaxage à travers les parois de la poche (1) jusqu'à obtenir une pâte de chocolat homogène,
- on verse la pâte de chocolat sur un support sur lequel on forme l'objet.

8. Procédé de fabrication d'un objet en chocolat de type couverture de chocolat selon la revendication 7, **caractérisé en ce que**, après avoir réalisé l'étape de malaxage primaire, on réalise une étape d'épaississement en refroidissant la poche de manière à ramener le chocolat à une température d'épaississement, et **en ce que**, avant de vider le contenu de la poche (1), réalise une étape de malaxage final.

9. Procédé de fabrication d'un objet en chocolat de type couverture de chocolat selon la revendication 8, **caractérisé en ce que**, entre l'étape d'épaississement et l'étape de malaxage final, on réalise une étape de malaxage intermédiaire pour favoriser l'homogénéité du mélange épaissi et on chauffe à nouveau la poche (1) pour porter le chocolat à une température intermédiaire.

10. Procédé de fabrication d'un objet en chocolat de type couverture de chocolat selon la revendication 9, **caractérisé en ce que** la température de malaxage est supérieure à la température d'épaississement et la température intermédiaire est comprise entre la température de malaxage et la température d'épaississement.

11. Procédé de fabrication d'un objet en chocolat de type couverture de chocolat selon l'une quelconque des revendications 7 à 10, **caractérisé en ce que**, pour chauffer la poche (1), on plonge cette dernière dans un liquide chaud.

12. Procédé de fabrication d'un objet en chocolat de type couverture de chocolat selon la revendication 9 ou 10, **caractérisé en ce que**, pour porter le chocolat à la température de malaxage, on plonge la poche (1) dans un liquide chaud, et **en ce que**, pour porter le chocolat à la température intermédiaire, on plonge la poche (1) dans le même liquide que l'on a laissé reposer pendant les étapes de malaxage primaire, d'épaississement et de malaxage intermédiaire.

13. Procédé de fabrication d'un objet en chocolat de type couverture de chocolat selon les revendications 11 ou 12, **caractérisé en ce que** la durée d'immersion de la poche (1) dans le liquide chaud est fonction de la température à laquelle la poche a été stockée.

14. Procédé de fabrication d'un objet en chocolat de type couverture de chocolat selon l'une quelconque des revendications 11 à 13, **caractérisé en ce qu'**il comprend en outre, préalablement au déversement du contenu de la poche (1), une étape de séchage destinée à éliminer toute trace de liquide sur la surface extérieure de celle-ci.

15. Procédé de fabrication d'un objet en chocolat de type couverture de chocolat selon l'une quelconque des revendications 7 à 14, **caractérisé en ce que**, avant de verser la pâte de chocolat sur le support sur lequel l'objet est formé, on verse le contenu de la poche (1) dans un récipient dans lequel on remue le chocolat.

## Claims

1. Process to make a chocolate packaging component in which separate pieces of chocolate are placed inside a bag, **characterized by** the fact that a bag with soft sides is used (1), the bag is closed (1) along a continuous seal once the chocolate pieces are placed inside (10), and by the fact that the pieces of chocolate (10) are placed inside (12), in such a way that the pieces (10) only fill part of the inner space (12) in order to leave some room (14) so that the pieces of chocolate can be kneaded (10) through the said sides (1) after the pieces (10) are heated until they form a paste, and by subjecting the pieces of chocolate (10) in the bag (1) to a prior treatment of a type of chocolate coating, designed to stabilize the said chocolate.

2. Process to make a chocolate packaging component according to claim 1, **characterized by** the fact that, before closing the bag (1), the inner space (12) containing the pieces of chocolate is depressurized (10), at a depressurization level chosen so that the effect of the dilation of the gas volume in the bag (1) in addition to the effect of the high temperature on the chocolate forming a paste, creates the internal volume necessary for kneading.

3. Process to make a chocolate packaging component according to claim 2, **characterized by** the fact that the prior treatment includes the following stages:
- heat the chocolate until it reaches a first temperature,
- cool the chocolate by kneading it or leaving it to cool, until it reaches a second temperature,
- heat the chocolate until it reaches a third temperature,
- spread the chocolate on a flat surface to form a thin layer of chocolate,
- leave the chocolate to harden and form a thin slab of chocolate,
- break up the chocolate slab to obtain the pieces of chocolate.

4. Process to make a chocolate packaging component according to claim 3, **characterized by** the fact that the thin layer of chocolate is less than 12 mm thick, preferably less than 5 mm, and even better 2 or 3 mm thick.

5. Process to make a chocolate packaging component according to claim 3 or 4, **characterized by** the fact that the first temperature is between 45°C and 60°C, the second temperature is between 24 and 29°C and preferably 26°C, and the third temperature is between 28°C and 32°C.

6. Process to make a chocolate packaging component according to any of the claims 1 to 5, **characterized by** the fact that the inner space (12) of the bag (1) is such that, when the chocolate melts and forms a smooth paste, the average thickness of the bag (1), lying flat on one side, is between 0.5 and 1 cm and preferably between 0.5 and 0.8 cm.

7. Manufacturing process for an object in a type of chocolate coating, **characterized by** the fact that:
- the packaging is made by the process according to any of the claims 1 to 6,
- the bag (1) containing the pieces of chocolate (10) is heated until the said pieces reach a kneading temperature,
- a primary kneading stage is done by kneading the pieces at the kneading temperature through the sides of the bag (1) until a smooth, chocolate paste is obtained,
- the chocolate paste is poured onto a surface on which the object is shaped.

8. Manufacturing process for an object in a type of chocolate coating according to claim 7, **characterized by** the fact, that after completing the primary kneading stage, there is a thickening stage by cooling the bag to bring the chocolate back to a thickening temperature, and by the fact that there is a final kneading stage before the bag is emptied (1).

9. Manufacturing process for an object in a type of chocolate coating according to claim 8, **characterized by** the fact that, between the thickening stage and the final kneading stage, there is an intermediary kneading stage to make the thickened blend smoother and the bag is reheated (1) to bring the chocolate to an intermediary temperature.

10. Manufacturing process for an object in a type of chocolate coating according to claim 9, **characterized by** the fact that the kneading temperature is higher than the thickening temperature and the intermediary temperature is between the two aforementioned temperatures.

11. Manufacturing process for an object in a type of chocolate coating according to any of the claims 7 to 10, **characterized by** the fact that the bag is plunged into a hot liquid to heat it (1).

12. Manufacturing process for an object in a type of chocolate coating according to claims 9 or 10, **characterized by** the fact that to get the chocolate to the kneading temperature, the bag is plunged (1) into a hot liquid, and by the fact that to get the chocolate to the intermediary temperature, the bag is plunged (1) into the same liquid that has been left to cool during the primary kneading, thickening and intermediary kneading stages.

13. Manufacturing process for an object in a type of chocolate coating according to claims 11 or 12, **characterized by** the fact that the time during which the bag is immersed (1) in the hot liquid depends on the temperature at which the bag is stored.

14. Manufacturing process for an object in a type of chocolate coating according to any of the claims 11 to 13, **characterized by** the fact that it also includes a drying stage designed to eliminate any trace of liquid on its outer surface, before the content of the bag is poured out (1).

15. Manufacturing process for an object in a type of chocolate coating according to any of the claims 7 to 14, **characterized by** the fact that, before pouring the chocolate onto the surface on which the object is shaped, the content of the bag emptied (1) into a container in which the chocolate is stirred.

## Patentansprüche

1. Herstellungsverfahren einer Schokoladenverpackung, wonach man lose Schokoladenstückchen in den Innenraum eines Beutels platziert, dabei wird ein flacher Beutel mit flexiblen Wänden (1) verwendet, man schließt den Beutel (1) mit einem fortlaufend geschlossenen Rand, nachdem man die Schokoladenstücke (10) eingefüllt hat und, indem man die Schokoladenstücke (10) in den Innenraum (12) platziert, sorgt man dafür, dass diese Stücke nur einen Teil des Innenraums einnehmen (12) so dass man im Innenraum einen freien Platz (14) schaffen kann, wodurch das Kneten der Schokoladenstücke (10) durch die flexiblen Wände (1) hindurch möglich ist, nachdem die Stücke (10) erhitzt werden, bis sie teigförmig werden und dass die Schokoladenstücke (10) im Beutel (1) das Ergebnis einer vorherigen Behandlung von Schokolade Typ Schokoladenüberzugsmasse ist, die dazu bestimmt ist, diese Schokolade in einen stabilisierten Zustand zu versetzen.

2. Herstellungsverfahren einer Schokoladenverpackung gemäß Anspruch 1, wonach vor dem Schließen des Beutels (1) man den Innenbereich, der die Schokoladenstücke (10) enthält, vakuumdicht verschließt (12), das Vakuumniveau wurde so gewählt, damit unter der Wirkung des Ausweitens des im Beutel (1) zusätzlich zur Schokolade enthaltenen Gasvolumens, unter Einwirkung des Temperaturanstiegs, der die Schokolade in teigartigen Zustand versetzt, das für das Kneten notwendige Volumen im Innern hergestellt wird.

3. Herstellungsverfahren einer Schokoladenverpackung gemäß Anspruch 2, wonach die genannte vorhergehende Behandlung folgende Schritte beinhaltet:
- die Schokolade bis auf eine erste Temperatur erhitzen,
- die Schokolade kalt werden lassen und dabei kneten, oder ruhen lassen, bis sie eine zweite Temperatur erreicht,
- die Schokolade erhitzen, bis sie eine dritte Temperatur erreicht,
- die Schokolade auf einer flachen Fläche verteilen, so dass eine dünne Schokoladenschicht entsteht
- die Schokolade ruhen lassen, bis sie fest wird und eine dünne Platte aus Schokolade entsteht,
- diese Schokoladenplatte in Schokoladenstückchen zerkleinern.

4. Herstellungsverfahren einer Schokoladenverpackung gemäß Anspruch 3, wonach die dünne Schicht Schokolade nicht dicker als 12 mm ist, vorzugsweise unter 5 mm und idealerweise zwischen 2 und 3 mm.

5. Herstellungsverfahren einer Schokoladenverpackung gemäß Anspruch 3 und 4, wonach die erste Temperatur zwischen 45°C und 60°C liegt, die zweite Temperatur zwischen 24°C und 29°C liegt, ideal bei 26°C, und die dritte Temperatur zwischen 28°C und 32°C liegt.

6. Herstellungsverfahren einer Schokoladenverpackung gemäß den Ansprüchen 1 bis 5, wonach der Innenraum (12) des Beutels (1) so sein muss, dass wenn die Schokolade geschmolzen ist und eine gleichmäßige Masse bildet, die mittlere Dicke des Beutels (1), wenn er auf einer großen Seite liegt, zwischen 0,5 und 1 cm beträgt, vorzugsweise zwischen 0,5 und 0,8 cm.

7. Herstellungsverfahren eines Schokoladengegenstandes Typ Schokoladenüberzugsmasse, wonach:
- eine Verpackung in einem Herstellungsverfahren gemäß den Ansprüchen 1 bis 6 hergestellt wird,
- man den Beutel (1) erhitzt, der die Schokoladenstücke enthält (10), bis diese Schokoladenstücke eine Knettemperatur erreicht haben,
- dann erfolgt eine erste Knetphase, wobei die Stücke bei Knettemperatur durch die Wände des Beutels (1) geknetet werden bis eine gleichmäßige Schokoladenmasse entsteht,
- dann wird die Schokoladenmasse auf eine Unterlage verteilt, auf der der Gegenstand geformt wird.

8. Herstellungsverfahren eines Schokoladengegenstandes Typ Schokoladenüberzugsmasse gemäß Anspruch 7, wonach nach der ersten Knetphase eine Verdickungsphase folgt, indem der Beutel so abgekühlt wird, dass die Schokolade eine Temperatur erreicht, bei der sie verdickt und bevor der Inhalt des Beutels (1) ausgeleert wird, erfolgt noch eine letzte Knetphase.

9. Herstellungsverfahren eines Schokoladengegenstandes Typ Schokoladenüberzugsmasse gemäß Anspruch 8, wonach zwischen der Verdickungsphase und der letzten Knetphase eine Zwischenknetphase erfolgt, damit die verdickte Masse so homogen wie möglich wird und der Beutel (1) erneut erhitzt wird, bis die Schokolade eine Zwischentemperatur erreicht.

10. Herstellungsverfahren eines Schokoladengegenstandes Typ Schokoladenüberzugsmasse gemäß Anspruch 9, wonach die Knettemperatur höher ist als die Verdickungstemperatur und die Zwischentemperatur zwischen der Knettemperatur und der Verdickungstemperatur liegt.

11. Herstellungsverfahren eines Schokoladengegenstandes Typ Schokoladenüberzugsmasse gemäß den Ansprüchen 7 bis 10, wonach, um den Beutel (1) zu erhitzen, dieser in eine heiße Flüssigkeit eingetaucht wird.

12. Herstellungsverfahren eines Schokoladengegenstandes Typ Schokoladenüberzugsmasse gemäß Anspruch 9 oder 10, wonach, um die Schokolade auf Knettemperatur zu erhitzen, der Beutel (1) in eine heiße Flüssigkeit getaucht wird, und um die Schokolade auf die Zwischentemperatur zu bringen, man den Beutel (1) in die gleiche Flüssigkeit taucht, die man während der ersten Knetphase, der Verdickungsphase und der Zwischenknetphase ruhen lassen hat.

13. Herstellungsverfahren eines Schokoladengegenstandes Typ Schokoladenüberzugsmasse gemäß den Ansprüchen 11 oder 12, wonach die Eintauchdauer des Beutels (1) in die heiße Flüssigkeit von der Temperatur abhängig ist, bei der der Beutel gelagert wurde.

14. Herstellungsverfahren eines Schokoladengegenstandes Typ Schokoladenüberzugsmasse gemäß den Ansprüchen 11 bis 13, wonach vor dem Ausgießen des Inhalts des Beutels (1) eine Trockenphase erfolgt, um jegliche Spuren von Flüssigkeit an der äußeren Fläche des Beutels zu beseitigen.

15. Herstellungsverfahren eines Schokoladengegenstandes Typ Schokoladenüberzugsmasse gemäß den Ansprüchen 7 bis 14, wonach, bevor die Schokolade auf die Fläche gegossen wird, auf der der Gegenstand geformt wird, man den Inhalt des Beutels (1) in einen Behälter gießt, in dem man die Schokolade umrührt.
